# EUROPEAN PATENT APPLICATION

(11) **EP 4 505 922 A1**
(43) Date of publication of application: **12.02.2025**
(21) Application number: 24193756.4
(22) Date of filing: 09.08.2024
(51) Int. Cl.: A47J 43/044, A47J 43/07

(54) **FOOD PROCESSING APPLIANCE HAVING AN ELECTRICAL HUB CONNECTION**

(30) Priority: 10.08.2023 US 202318232521
(71) Applicant: Whirlpool Corporation, Benton Harbor, MI 49022 (US)
(72) Inventor: Hill, Eric Andrew, BENTON HARBOR, 49022 (US); Hughes, Richard John, BENTON HARBOR, 49022 (US); Mock, Brandon T., BENTON HARBOR, 49022 (US); Rutter, Ryan James, BENTON HARBOR, 49022 (US)
(74) Representative: Eisenführ Speiser

(57) **Abstract**

A food processing apparatus (10) includes a body (12). The food processing apparatus (10) includes a first connection interface (14) disposed on the body (12) and configured to selectively receive a mixing tool (16). The food processing apparatus (10) includes a drive unit (18) disposed in the body (12) and configured to rotate the mixing tool (16) via the first connection interface (14). The food processing apparatus (10) includes a second connection interface (20) disposed on the body (12) and configured to selectively receive an attachment (22) having an electrical component (24). The second connection interface (20) includes an electrical interface (26). The food processing apparatus (10) includes a power circuit (28) configured to supply electrical power to the electrical component (24) via the electrical interface (26).

## Description

### BACKGROUND OF THE DISCLOSURE

The present disclosure generally relates to a food processing appliance having an electrical hub connection and, more specifically, to power and data connectivity between a stand mixer and a hub accessory.

### SUMMARY OF THE DISCLOSURE

According to one aspect of the present disclosure, a food processing apparatus includes a body. The food processing apparatus includes a first connection interface disposed on the body and configured to selectively receive a mixing tool. The food processing apparatus includes a drive unit disposed in the body and configured to rotate the mixing tool via the first connection interface. The food processing apparatus includes a second connection interface disposed on the body and configured to selectively receive an attachment having an electrical component. The second connection interface includes an electrical interface. The food processing apparatus includes a power circuit configured to supply electrical power to the electrical component via the electrical interface.

According to another aspect of the present disclosure, a food processing apparatus includes a body. The food processing apparatus includes a first connection interface disposed on the body and configured to selectively receive a mixing tool. The food processing apparatus includes a drive unit disposed in the body and configured to rotate the mixing tool via the first connection interface. The food processing apparatus includes a second connection interface disposed on the body and configured to selectively receive an attachment having an electrical component. The second connection interface includes an electrical interface. The food processing apparatus includes an operational circuit configured to supply electrical power and data to the electrical component via the electrical interface.

According to another aspect of the present disclosure, a food processing apparatus includes a mixing head that includes a connection interface configured to selectively receive a mixing tool and a hub configured to selectively receive an attachment. The floor processing apparatus includes a drive unit disposed in the mixing head and configured to rotate the mixing tool via the connection interface. The attachment includes an electrical component. Operational circuitry is communicatively coupled with the drive unit. An electrical interface is disposed on the hub providing electrical communication between the electrical component and the operational circuitry.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a top perspective view of a stand mixer incorporating a hub connection having mechanical and electrical connections for an accessory attachment;
FIG. 2A is a top perspective view of a peeler configured to connect with the hub of the stand mixer of FIG. 1;
FIG. 2B is top perspective view of a dispenser configured to connect with the hub of the stand mixer of FIG. 1;
FIG. 2C is a top perspective view of pasta-roller attachment configured to connect with the hub of the stand mixer of FIG. 1;
FIG. 3 is a block diagram of a food processing apparatus demonstrating mechanical connections, in solid lines, and electrical connections, in dashed lines, for an accessory attachment;
FIG. 4 is a front perspective view of a hub for a food processing apparatus with the hub in a partially disassembled state;
FIG. 5 is an exploded top perspective view of a connection between a camera attachment for the food processing apparatus and the hub of the food processing apparatus of FIG. 4;
FIG. 6A is a front perspective view of the hub of FIG. 5 covered by a cap;
FIG. 6B is a front perspective view of the hub of FIG. 6A having the cap removed revealing an electrical interface for the hub;
FIG. 6C is a front perspective view of the imaging attachment of FIG. 5 connected to and interacting with the electrical interface of the hub of FIGS. 5-6B; and
FIG. 7 is a block diagram of a communication circuit for a food processing apparatus.

The components in the figures are not necessarily to scale, emphasis instead being placed upon illustrating the principles described herein.

### DETAILED DESCRIPTION

The present illustrated embodiments reside primarily in combinations of method steps and apparatus components related to a food processing appliance having an electrical hub connection. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

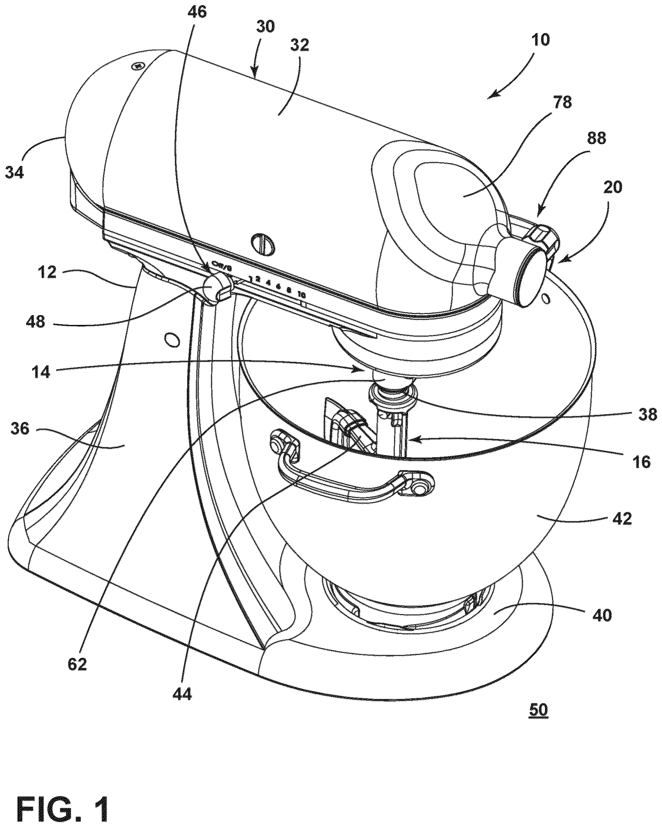

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refertothe surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

Referring to FIGS. 1-7, reference numeral 10 generally designates a food processing apparatus that provides for enhanced interaction with accessories for the food processing apparatus 10. The food processing apparatus 10 includes a body 12 and a first connection interface 14 disposed on the body 12. The first connection interface 14 is configured to selectively receive a mixing tool 16. A drive unit 18 is disposed in the body 12 and is configured to rotate the mixing tool 16 via the first connection interface 14. A second connection interface 20 is disposed on the body 12 and is configured to selectively receive an attachment 22 having an electrical component 24. The second connection interface 20 includes an electrical interface 26. The food processing apparatus 10 includes a power circuit 28 configured to supply electrical power to the electrical component 24 via the electrical interface 26.

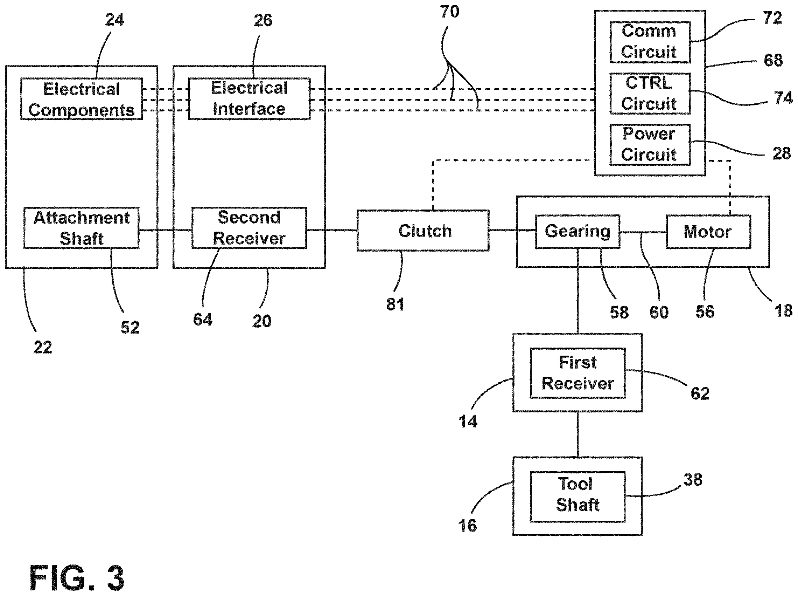

Referring now to FIG. 1, the food processing apparatus 10 is exemplarily demonstrated as a stand mixer 30 that includes a mixing head 32 having a housing 34 connected to a stand 36. The stand 36 supports the mixing head 32 above a work surface 40. The housing 34 encloses the drive unit 18 (FIG. 3) that drives rotation of a mixing shaft 38 of the mixing tool 16 and, in some examples, at least a portion of the attachment 22. A mixing bowl 42 is removably coupled with the stand 36 and is configured to receive food items for mixing by the mixing tool 16. As shown, the mixing tool 16 is a beater 44 that may be used, in one aspect, to prepare batters, frostings, and/or other food products. Other mixing tools 16 include whisks, hooks, or any other mixing element that is configured to process the food items in the bowl 42 to create a mixture of the food items.

Still referring to FIG. 1, a user interface 46 is provided for controlling the stand mixer 30. For example, the user interface 46 includes a siding control knob 48 accessible from an exterior 50 of the housing 34 that can control the speed of the drive unit 18 based on the position of the sliding control knob 48. It is contemplated that buttons, switches, or other mechanisms (e.g., a touch screen, a capacitive switch) for interaction by a user may be incorporated into the stand mixer 30 to allow the user to control the stand mixer 30. For example, by utilizing electrical communication with the attachment 22 for the second connection interface 20, which may alternatively be referred to as the hub 20, the user interface 46 may allow for independent control of the attachment 22.

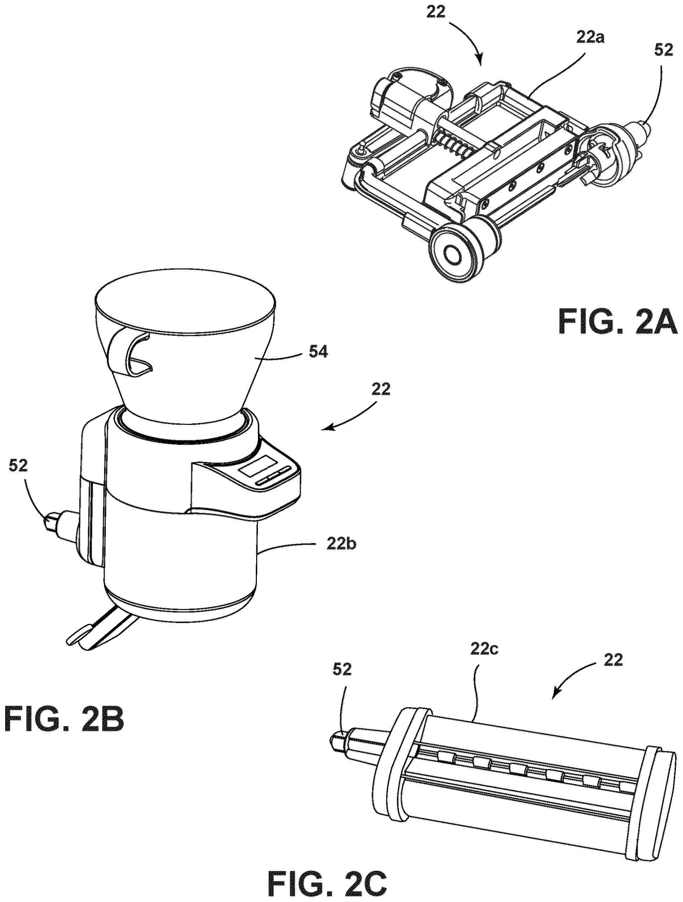

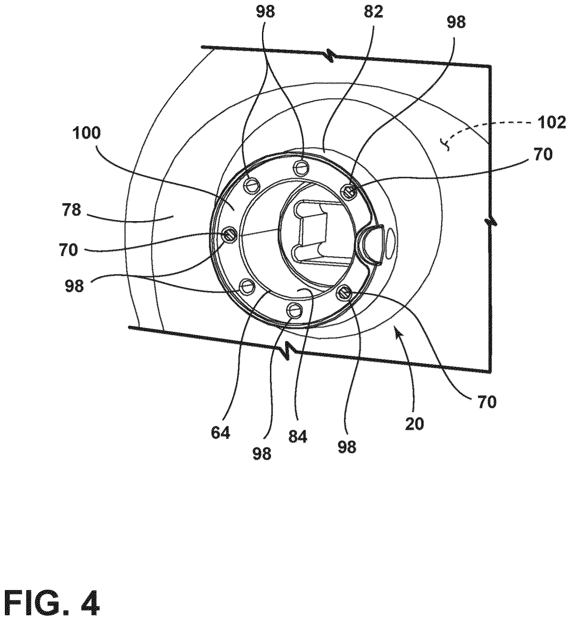

Referring now to FIGS. 2A-2C, examples of the attachment 22 to the hub 20 include a peeler 22a, a dispenser 22b, and a pasta-roller 22c. The hub 20 is configured to receive an attachment shaft 52 of each of these exemplary attachments 22 to allow the drive unit 18 to impart mechanical energy into the attachment 22, via, for example, rotation of the attachment shaft 52 by the drive unit 18. While each of these exemplary attachments 22 includes the attachment shaft 52, it is contemplated that the electrical interface 26 may provide for limited mechanical interaction and provide for independent control of the attachment 22 relative to operation of the drive unit 18. For example, while the peeler 22a (FIG. 2A) conventionally uses mechanical energy to the attachment shaft 52 to drive peeling of food items for the peeler 22a, the electrical connection between the attachment 22 and the hub 20 may allow the peeler 22a to have an independent power source and/or actuator, such as a motor, a solenoid, or another actuator to drive peeling of the food items. In the example of the dispenser 22b (FIG. 2B), rather than utilizing mechanical power driven to the attachment shaft 52, the electrical components 24 in the dispenser 22b may be electrically powered to allow for independent control of dispensing of contents of a hopper 54 of the dispenser 22b. Similarly, in the example of the pasta-roller 22c (FIG. 2C), an independent source of mechanical power may be provided within the pasta-roller 22c to independently drive rollers of the pasta-roller 22c relative to an output of the drive unit 18 and the housing 34. It is contemplated that both the electrical connection and the mechanical connection may be provided between the attachment 22 and the hub 20. It is further contemplated that other exemplary attachments 22 may be used with the hub 20, such as a scale, a camera accessory 22d (FIGS. 4-6C), a slicer, a shredder, etc.

Referring now to FIG. 3, the drive unit 18 includes a motor 56 mechanically coupled with gearing 58. The motor 56 can be a variable speed alternating-current (AC) motor 56 that can be controlled by a user via the sliding control knob 48 or controlled in another way. In other examples, the motor 56 is a direct-current (DC) motor 56, such as a brushless DC motor or a brushed DC motor controlled digitally using an adaptation of the control knob 48 or using a digital interface. The gearing 58 can include any number of transmission gears for stepping up or stepping down the gearing 58 ratio of the drive unit 18. The gearing 58 may further be configured to adjust an axis of rotation, such that the motor 56 may drive rotation of the first connection interface 14 and the second connection interface 20 via the gearing 58, and the first connection interface 14 may be oriented in a different axis of rotation than an output shaft 60 of the motor 56. For example, the motor 56 may be configured to rotate a first receiver 62 of the first connection interface 14 and a second receiver 64 of the second connection interface 20, with the first receiver 62 facing downwardly toward the bowl 42 and the second receiver 64 facing toward a front of the food processing apparatus 10. In this way, the motor 56 may control rotation of the mixing tool 16 when the mixing shaft 38 engages the first receiver 62 and/or rotation of at least a part of the attachment 22 when the attachment shaft 52 engages the second receiver 64.

It is contemplated that the first and second receivers 62, 64 may have keyed connections that are configured to receive the shafts 38, 52 at a specific orientation. In general, the receivers 62, 64 may couple the shafts 38, 52 to the body 12 of the food processing apparatus 10 via any mechanical interlock, such as a magnetic connection, a threaded connection, a pressure fit connection, or any other mechanical interface that allows rotation of the shafts 38, 52 and receives the mixing tool 16 and/or the attachment 22.

With continued reference to FIG. 3, the hub 20 includes the electrical interface 26 and the second receiver 64 to provide both mechanical and electrical connection via the hub 20. In this way, the electrical components 24 of the attachment 22 may be powered and/or in electrical communication with operational circuitry 68 of the food processing apparatus 10. For example, at least one conductor 70 configured to carry voltage, current, data, digital signals, analog signals, or any other electrical signal may be provided to the electrical interface 26 and in electrical communication with the operational circuitry 68. For example, the operational circuitry 68 can include a communication circuit 72, control circuitry 74, and the power circuit 28. The power circuit 28 may include power regulation circuitry, power distribution circuitry, transformers, digital-to-analog converters, or any other electrical circuitry that is configured to convert or distribute power to electrical devices of the food processing apparatus 10.

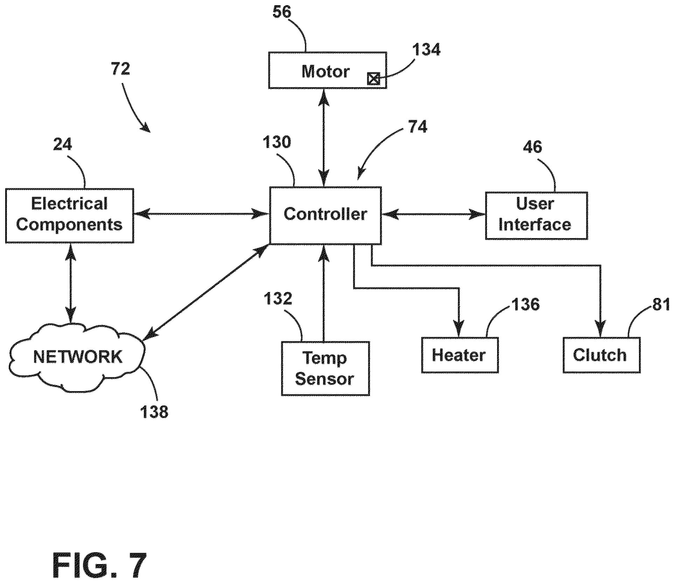

In one example, the power circuit 28 receives AC power from an electrical outlet and converts the AC power to DC power for powering the control circuitry 74, the motor 56, and/or various sensors of the food processing apparatus 10. In this way, the power circuit 28 may provide electrical power to any of the electrical devices, including electrical components 24 of the attachment 22 to allow communication on the communication circuit 72. As will be described further in reference to FIG. 7, the control circuitry 74 can communicate with the motor 56 and/or the electrical components 24 via the communication circuit 72. For example, the communication circuit 72 may provide for identification and detection of the attachment 22 coupled to the hub 20 based on power and/or data signals exchanged on the communication circuit 72. Further, the control circuitry 74 may control operation of the attachment 22 and/or the motor 56 based on the identification and/or detection of the attachment 22. By way of example, a relay, a transistor, or another switching device may electrically interpose a power source and the electrical interface 26. The control circuitry 74 can control the switching device to control the electrical power to the attachment 22.

With continued reference to FIG. 3, a clutch 81 is provided for selectively coupling the drive unit 18 with the attachment 22. In particular, the clutch may be disposed between the gearing 58 and the second receiver 64. The clutch 81 may be any selective braking mechanism that interrupts mechanical linkage between the drive unit 18 and the hub 20. For example, the clutch 81 may include an solenoid that is electrically actuatable in response to a signal from the operational circuitry 68. The solenoid may be normally-closed or normally-open, such that energizing or de-energizing an electrical coil of the solenoid may cause mechanical coupling or mechanical de-coupling with the drive unit 18. By way of example and not limitation, the control circuit 74 may apply an electrical signal to the clutch 81 to cause rotation of the attachment shaft 52 in response to rotation of an output shaft of the drive unit 18. Similarly, the control circuit 74 may interrupt the electrical signal to release connection between the drive unit 18 and the second receiver 64. It is contemplated that, in addition to being configured for on/off operation based on an identity or operation of the attachment, the food processing apparatus 10 can alternatively activate/deactivate the clutch 81 at a frequency different than the RPM of the tool shaft 38. The frequency at which the solenoid is energized may be controlled by the control circuit 74 to adjust mechanical energy (e.g., speed of a slicer, a dispenser, etc.) independent of the speed of the tool shaft 38 and corresponding tool 16 (e.g., beater, mixer, etc.).

In examples that include the clutch 81, it is contemplated that electrical power and data need not be exchanged at the hub 20 for applications that do not require electrical components 24 in the attachment 22 but allow for independent control of aspects of the attachment 22. Thus, the appliance 10 can provide for independent control of the attachment 22 relative to the tool 16 without electrical interfacing at the hub 20. However, in some examples, both the clutch 81 and the electrical interface 26 are provided for electrical and mechanical coupling.

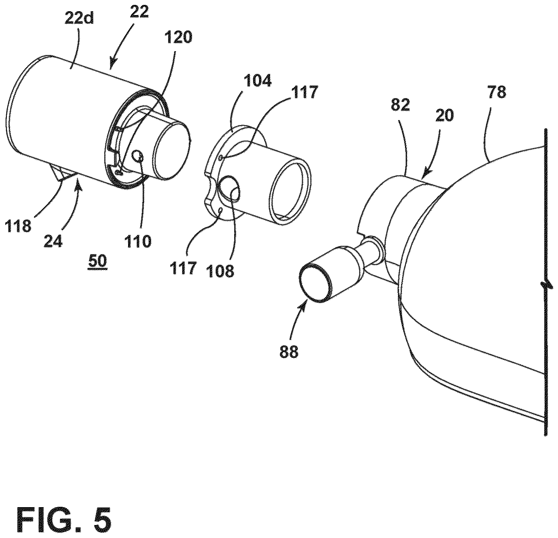

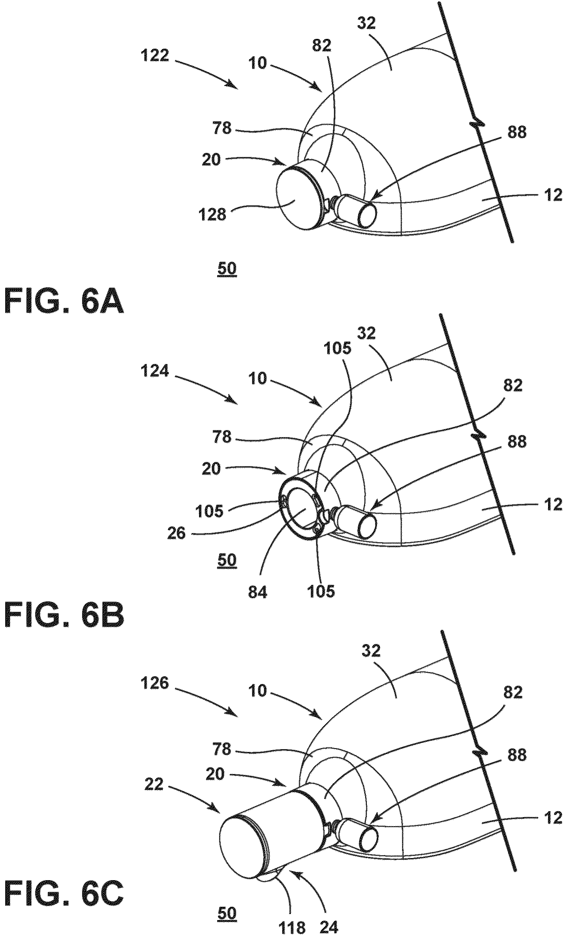

Referring now to FIG. 4, the hub 20 has a generally cylindrical shape and extends from a front surface 78 of the housing 34. The hub 20 includes a peripheral wall 82 that defines a cavity 84 configured to house at least a portion of the attachment 22. The second receiver 64 is arranged within the cavity 84 and is configured to mate with the attachment shaft 52, such that interaction with the attachment shaft 52 and the second receiver 64 allows rotational motion from the motor 56 to be carried into the attachment 22. As will be described further in reference to FIGS. 5-6B, a lock feature 88 may threadedly engage a hole in the peripheral wall to selectively lock the attachment 22 with the hub 20 when the attachment 22 is inserted into the hub 20.

Still referring to FIG. 4, the peripheral wall 82 further defines a plurality of holes 98 that extend from a front face 100 of the peripheral wall 82 to an interior 102 of the housing 34. Some or all of the plurality of holes 98 may house a conductor 70 that carries electrical signals from the operational circuitry 68, through the peripheral wall 82, to the front face 100 of the peripheral wall 82. The conductors 70 may connect and/or be included in the operational circuitry 68. As will be further described with reference to FIGS. 5-6C, a collar 104 may be attached with the peripheral wall 82 and include one or more conductive pads 105 that have electrical contact with a corresponding conductor 70 and provide for an electrical interaction with the attachment 22. The collar 104 may be installed during manufacturing or selectively attached with the peripheral wall 82 by a user. In some examples, the collar 104 is unitary with or integrated with the peripheral wall 82. In general, the conductive pads 105 are disposed on the front face 100 of the hub 20 for electrical interaction with the attachment 22.

Referring now to FIGS. 5-6C, interaction of the hub 20 with a camera accessory 22d is generally depicted with mechanical and electrical interaction of the hub 20 with the attachment 22 demonstrated. With particular reference to FIG. 5, the collar 104 for the hub 20 may be press fit or preinstalled into the cavity 84 and configured to receive at least a portion of the lock feature 88. In this example, the collar 104 defines a second aperture 108 that aligns with the hole in the peripheral wall 82 and allows the lock feature 88 to interact with a detent 110 formed on the attachment 22 to secure the attachment 22 with the hub 20. The collar 104 also defines a plurality of slots 117 (FIG. 5) that are overlaid by the pads 105 and provide electrical connection with one or more of the conductors 70 behind the pads 105 (FIG. 6B). Thus, the slots 117 may align with one or more of the holes 98 to allow the conductors 70 to electrically contact the pads 105 from behind the pads 105.

The attachment 22 includes a plurality of conductive pins 120 that are biased by a biasing member, such as a spring, to contact the electrical pads 105 (FIG. 6B). While each conductive pin 120 may serve as an electrical contact point, any conductive mechanism may be provided as an electrical contact point that engages the at least one conductive pad 105 to establish the electrical interaction between the hub 20 and the attachment 22. Wiring or other conductive tracing is provided within the attachment 22 for connection with the electrical component 24. It is contemplated that any other form of electrical conductors may be provided between the hub 20 and the attachment 22 to provide electrical communication between the operational circuitry 68 and the attachment 22. For example, plugs, sockets, terminals, or rotatable or threaded connections having conducting portions may be provided at the hub 20 to provide the electrical connection. In some examples, the electrical connection is wireless via induction. For example, a first induction coil may be disposed in the hub 20, and a second induction coil may be in the attachment 22. In this example, the first induction coil may be powered via the operational circuitry, and electrical power may be wirelessly transferred via induction to the second coil for powering the electrical components 24. In the present example, the electrical component 24 includes the imaging device 118 as well as any image processing devices, actuators, light-emitting diodes, or any other electrical component 24 with electrical energy and/or electrical communication capabilities (e.g., data, digital signal communication, analog signal communication, etc.).

Referring now more particularly to FIGS. 6A-6C, installation of the attachment 22 to the hub 20 is demonstrated across three conditions 122, 124, 126 of the food processing apparatus 10. In a first condition 122 (FIG. 6A), the hub 20 is covered by a cap 128 to limit interaction with the mechanical or electrical interaction features of the hub 20. For example, the pads 105 of the collar 104 may be limited from exposure to the region external to the food processing apparatus 10. In a second condition 124 (FIG. 6B), the user removes the cap 128 to reveal the cavity 84 and the electrical interface 26. In a (FIG. 6C), the attachment 22 is inserted into the cavity 84, the user locks the attachment 22 with the hub 20 via the lock feature 88, and electrical communication between the operational circuitry 68 and the attachment 22 is provided as the pins 120 contact the pads 105.

It is contemplated that, although illustrated as a separate component, the collar 104 may be preinstalled or otherwise omitted from the hub 20, such that the pads 105 are applied directly over the holes 98 shown and described with respect to FIG. 4. Thus, in general, the present arrangement provides for the electrical interface 26 at a face of the hub 20 which, in the present examples, is formed by the collar 104.

Although three conductors 70 are illustrated in the example illustrated in FIGS. 4-6C, it is contemplated that any number of conductors 70 may be used for the electrical interface 26. Power, data, or both power and data may be communicated across the electrical interface 26 to the electrical components 24 of the attachment 22. Power may be selectively provided to selectively energize one or more of the electrical components 24 to provide fine-tuned control of the attachment 22 rather than using only a mechanical connection with the drive unit 18. For example, the control circuitry 74 may control a relay or another electrical component 24 that can interrupt electrical power on one or more of the conductors 70. In one example, power is provided when the attachment 22 is connected, and one of the conductors 70 is a dedicated data communication line to selectively control one or more of the electrical components 24. In either example, the attachment 22 is controlled by the operational circuitry 68. In this way, separate switches or buttons for controlling the attachment 22 may be limited or eliminated from the attachment 22. Further, by controlling electrical signals exchanged across the electrical interface 26, faster response times than only mechanical connection to the drive unit 18 may be provided.

Referring now to FIG. 7, the communication circuitry 72 provides for communication among a controller 130 of the control circuitry 74 and the motor 56, the user interface 46, the electrical components 24 of the attachment 22, the clutch 81, a temperature sensor 132 that detects a temperature corresponding to the food items in the mixing bowl 42, a motion sensor 134 that detects motion (e.g., rotation, speed, acceleration, jerk etc.) of the motor 56, and a heater 136 for warming the mixing bowl 42 and contents thereof. The controller 130 may be disposed in the housing and can include a processor and a memory that stores instructions related to food processing operations for the attachment 22 and/or the mixing tool 16. The processor is configured to execute the instructions to cause the controller 130 to read from various sensors, such as the temperature sensor 132, feedback from the motor 56, or the like, and write data to control the electrical components 24, the motor 56, and/or the heater 136.

In some examples, the control circuitry 74 includes more than one controller configured to control operations related to food processing. For example, the electrical components 24 of the attachment 22 can include another control device, such as signal processing circuitry, a processor, a memory, or the like, that is configured to communicate with the controller 130 of the food processing apparatus 10. For example, when the attachment 22 receives electrical power via the electrical interface 26, a secondary controller in the attachment 22 may be energized and operable to control one or more actuators in the attachment 22. Further, the secondary controller may have wired or wireless communication with the controller 130 when energized. In the example of a secondary controller in the attachment 22, because the secondary controller is part of the control circuitry 74, the control circuitry 74 can electrically interpose the electrical interface 26 and an actuator of the electrical component 24 to control the electrical power to the actuator. In this way, actuators (e.g., motors, valves, solenoids, heaters, etc.) of the attachment 22 may be controlled locally by the secondary controller.

In one example, the actuator in the attachment 22 can selectively interrupt driving of food processing operations carried out by the attachment 22. For example, the drive unit 18 can drive an auger or other device in the attachment to dispense food items into the mixing bowl 42, and the actuator may selectively couple an output of the drive unit 18 with the auger. The selective coupling may be controlled based on the presence or absence of an electrical potential or electrical power applied to the electrical component 24 (e.g., an electro-mechanical actuator). Thus, similar to the clutch 81 described previously within the body 12, a similar clutch or brake feature may be used in the attachment 22 to couple or decouple mechanical connection of a driven component in the attachment 22 with the drive unit 18 in the body 12.

In some examples, the electrical interface 26 includes power connections and data connections via the at least one conductor 70 (e.g., two or more conductors 70 for power and one or more conductors 70 for data) to allow the secondary controller to communicate with the controller 130. In another example, a dedicated data conductor 70 at the electrical interface 26 is omitted and the secondary controller is configured to wirelessly communicate with the controller 130 over a wireless network 138 (e.g., a wireless communication circuit). In such an example, a first wireless communication device is provided in the body 12 and a second wireless communication device is provided in the attachment 22. The secondary controller and the controller 130 may be configured to communicate over Wi-Fi^{®}, Bluetooth^{®}, ZigBee^{®}, or any other short- or long- wave wireless communication protocol via the wireless communication circuit 138 between the first and second wireless communication devices. Accordingly, the only electrical connection at the electrical interface 26 may be power, and data may be communicated wirelessly from the controller 130 and/or another device on the wireless network 138 (e.g., a smartphone or other wireless communication device configured to control operation of the attachment 22 and/or the mixing tool 16. For example, the camera accessory 22d may include an image processor in the attachment 22 that is configured to detect a state of the food items and/or mixing in the bowl 42 and communicate the state wirelessly or over a wired conductor 70 to the controller 130 and, in response, the controller 130 can control the motor 56 and/or the heater 136 based on the detected state.

In some examples, the electrical components 24 include an actuator, such a second motor, a valve, a solenoid, a heater, etc. that is directly controlled via a conductor 70 for data. For example, a controlled output from the control circuitry 74 (e.g., a digital output of 5 volts) is communicated to energize the second motor of the dispenser 22b to cause additives for the mixed food items to dispense into the bowl 42. In another example, the second motor rotates rollers of the pasta-roller 22c. As previously described, the clutch 81 may be controlled for selective mechanical interface with mechanisms in the attachment 22, such as the speed of a dispensing operation, a blending operation, or any other food processing operation based on selective rotation of the attachment shaft 52.

Still referring to FIG. 7, the temperature sensor 132 may be configured to monitor a temperature of the bowl 42 and communicate the temperature data to the controller 130. For example, the temperature sensor 132 may be placed at a base of the stand 36 near the work surface 40 for detecting the temperature of the bowl 42. In response to the temperature, the controller 130 may communicate signals or instructions to the electrical components 24 to limit or increase actuation of the attachment 22. The controller 130 may additionally, or alternatively, communicate signals to the motor 56 to adjust the speed of the motor 56 in response to the temperature increasing or decreasing at a given rate. It is also contemplated that the inputs to the user interface 46 may cause the controller 130 to control the motor 56 at a given speed and/or control the electrical components 24 at a given rate. For example, a user may input to the user interface 46 an instruction to deactivate or activate the attachment 22. In response, the controller 130 may communicate, either over the wireless network 138 or over a conductor 70 of the electrical interface 26 a signal to activate or deactivate the electrical components 24.

In a nonlimiting example, a dough preparation process is carried out by the food processing apparatus 10. The dispenser 22b is coupled to the hub 20 for power (e.g., at least electrical power) and data connectivity between an actuator within the attachment 22 and the operational circuitry 68 in the body 12 of the food processing apparatus 10. In operation, the user provides various food ingredients into the bowl 42, and additives (e.g., chocolate chips) are provided in the hopper 54 of the dispensing attachment 22. As the motor 56 drives the mixing tool 16 to mix the dough in the bowl 42, the control circuitry 74 communicates an output to activate the actuator to dispense the additives into the mixing bowl 42. Heat may be generated by mixing and/or the heater 136 to at least partially melt the additives. The temperature of the mixture is detected by the temperature sensor 132, and feedback from the motor 56 is detected by the motion sensor 134. Based on the temperature, the controller 130 may energize or deenergize the heater 136. Based on the feedback (e.g., over-torque, lock-up conditions, speed), the controller 130 may control the motor 56 to have a lower or higher rotations per minute (RPM). Further, the controller 130 may control electrical components 24 (e.g., the second motor) via power and/or the data connections to limit dispensing of the additives in response to the temperature of the mixture, the speed of the motor 56, or other detected features. By providing the electrical interface 26 at the hub 20, the attachment 22 may be more quickly and efficiently controlled relative to only a mechanical connection with the drive unit 18.

In another nonlimiting example, which may be incorporated in any of the previous examples, data and/or a combination of signals exchanged between the attachment 22 and the control circuitry 74 allows the controller 130 to identify the type of attachment 22. For example, the attachments 22 may have digital signal identifiers, such as target resistances, target voltages, or other electrical properties that are communicated to the controller 130 when the electrical connection is completed. Based on the electrical signature, the controller 130 may control the motor 56, the heater 136, and/or the electrical components 24 with a pre-defined operation. In addition, operational parameters specific to the attachment 22 connected to the hub 20 may be presented to the user via a display of the user interface 46. Thus, when the peeler 22a is connected, the user interface 46 may display an option for the user to activate the peeler 22a when the drive unit 18 is energized and de-activate the peeler 22a when the drive unit 18 is deenergized. In this way, connection of the peeler 22a to the body 12 may or may not automatically cause the attachment 22 to operate when the drive unit 18 is operating, as such operation may be controlled independently.

The previously described examples of electrical components 24 are exemplary and nonlimiting. Any power or data connection between the body 12 and the attachment 22 for enhanced control over electrical components 24 is provided by the food processing apparatus 10 of the present disclosure. In general, electrical communication between the operational circuitry 68 and the attachment 22 allows for quicker response times relative to only mechanical connections. Further, the electrical interface 26 provides limiting cost and/or complexity of providing a power supply for the attachment 22 (e.g., batteries). The electrical interface 26 also provides for a universal, or standardized, portal for the food processing apparatus 10 to receive complex and simple accessory attachments 22 alike.

The invention disclosed herein is further summarized in the following paragraphs and is further characterized by combinations of any and all of the various aspects described therein.

According to one aspect of the present disclosure, a food processing apparatus includes a body. The food processing apparatus includes a first connection interface disposed on the body and configured to selectively receive a mixing tool. The food processing apparatus includes a drive unit disposed in the body and configured to rotate the mixing tool via the first connection interface. The food processing apparatus includes a second connection interface disposed on the body and configured to selectively receive an attachment having an electrical component. The second connection interface includes an electrical interface. The food processing apparatus includes a power circuit configured to supply electrical power to the electrical component via the electrical interface.

According to another aspect, the food processing apparatus includes control circuitry in communication with the drive unit and a communication circuit providing communication between the control circuitry and the electrical component when the attachment couples with the body.

According to another aspect, the communication circuit includes at least one conductor at the electrical interface. The control circuitry is configured to electrically communicate data with the electrical component via the at least one conductor.

According to another aspect, the food processing apparatus includes a wireless communication network having a first wireless communication device disposed in the body and a second wireless communication device disposed in the attachment.

According to another aspect, at least one conductor includes a first conductor configured to supply electrical power to the electrical component and a second conductor configured to supply data between the control circuitry and the electrical component.

According to another aspect, the food processing apparatus includes the electrical component includes an actuator that actuates in response to the electrical power being supplied to the electrical component from the power circuit.

According to another aspect, the drive unit is configured to drive a food processing operation of the attachment and the actuator is configured to selectively interrupt driving of the food processing operation based on the supply of the electrical power to the actuator.

According to another aspect, the control circuitry electrically interposes the electrical interface and the actuator to control the electrical power to the actuator.

According to another aspect, the control circuitry is configured to control motion of the drive unit and motion of the actuator. The motion control of the drive unit is at least partially independent of the motion control of the actuator.

According to another aspect, the food processing apparatus includes a sensor configured to detect a thermal condition of a mixing bowl of the food processing apparatus. The drive unit includes a motor and the control circuitry is configured to control the motor based on the thermal condition.

According to another aspect, the electrical interface includes at least one conductive pad disposed on a front face of the second connection interface for electrical interaction with the attachment.

According to another aspect, The attachment includes an electrical contact point engaging the at least one conductive pad to establish the electrical interaction.

According to another aspect, on the food processing apparatus includes a mixing head. The first connection interface is disposed on an underside of the mixing head, and the second connection interface is disposed on a front of the mixing head.

According to yet another aspect of the present disclosure, a food processing apparatus includes a body. The food processing apparatus includes a first connection interface disposed on the body and configured to selectively receive a mixing tool. The food processing apparatus includes a drive unit disposed in the body and configured to rotate the mixing tool via the first connection interface. The food processing apparatus includes a second connection interface disposed on the body and configured to selectively receive an attachment having an electrical component. The second connection interface includes an electrical interface. The food processing apparatus includes an operational circuit configured to supply electrical power and data to the electrical component via the electrical interface.

According to another aspect, the electrical component includes an actuator and the operational circuitry includes control circuitry configured to control motion of the drive unit and motion of the actuator. The motion control of the drive unit is at least partially independent of the motion control of the actuator.

According to another aspect, the electrical interface includes at least one conductive pad disposed on a front face of the second connection interface for electrical interaction with the attachment.

According to another aspect, the attachment includes an electrical contact point engaging the at least one conductive pad to establish the electrical interaction.

According to another aspect of the present disclosure, a food processing apparatus includes a mixing head that includes a connection interface configured to selectively receive a mixing tool and a hub configured to selectively receive an attachment. The floor processing apparatus includes a drive unit disposed in the mixing head and configured to rotate the mixing tool via the connection interface. The attachment includes an electrical component. Operational circuitry is communicatively coupled with the drive unit. An electrical interface is disposed on the hub providing electrical communication between the electrical component and the operational circuitry.

According to another aspect, the electrical component includes an actuator and the operational circuitry includes control circuitry configured to control motion of the drive unit and motion of the actuator. The motion control of the drive unit is at least partially independent of motion control of the actuator.

According to another aspect, the connection interface is disposed on an underside of the mixing head and the hub is provided on a front of the mixing head.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A food processing apparatus (10), comprising:
a body (12);
a first connection interface (14) disposed on the body (12) and configured to selectively receive a mixing tool (16);
a drive unit (18) disposed in the body (12) and configured to rotate the mixing tool (16) via the first connection interface (14);
a second connection interface (20) disposed on the body (12) and configured to selectively receive an attachment (22) having an electrical component (24), wherein the second connection interface (20) includes an electrical interface (26); and
a power circuit (28) configured to supply electrical power to the electrical component (24) via the electrical interface (26).

2. The food processing apparatus (10) of claim 1, further comprising:
control circuitry (74) in communication with the drive unit (18); and
a communication circuit (72) providing communication between the control circuitry (74) and the electrical component (24) when the attachment (22) couples with the body (12).

3. The food processing apparatus (10) of claim 2, wherein the communication circuit (72) includes at least one conductor (70) at the electrical interface (26), wherein the control circuitry (74) is configured to electrically communicate data with the electrical component (24) via the at least one conductor (70).

4. The food processing apparatus (10) of either one of claims 2-3, further comprising:
a wireless communication network having a first wireless communication device disposed in the body (12) and a second wireless communication device disposed in the attachment (22).

5. The food processing apparatus (10) of claim 3, wherein the at least one conductor includes a first conductor (70) configured to supply the electrical power to the electrical component (24) and a second conductor configured to supply the data between the control circuitry (74) and the electrical component (24).

6. The food processing apparatus (10) of any one of claims 2-5, wherein the electrical component (24) includes an actuator that actuates in response to the electrical power being supplied to the electrical component (24) from the power circuit (28).

7. The food processing apparatus (10) of claim 6, wherein the drive unit (18) is configured to drive a food processing operation of the attachment (22) and the actuator is configured to selectively interrupt driving of the food processing operation based on the supply of the electrical power to the actuator.

8. The food processing apparatus (10) of claim 6, wherein the control circuitry (74) electrically interposes the electrical interface (26) and the actuator to control the electrical power to the actuator.

9. The food processing apparatus (10) of claim 6, wherein the control circuitry (74) is configured to control motion of the drive unit (18) and motion of the actuator.

10. The food processing apparatus (10) of claim 9, wherein the motion control of the drive unit (18) is at least partially independent of the motion control of the actuator.

11. The food processing apparatus (10) of any one of claims 2-10, and further comprising:
a sensor (132) configured to detect a thermal condition of a mixing bowl (42) of the food processing apparatus (10), wherein the drive unit (18) includes a motor (56) and the control circuitry (74) is configured to control the motor (56) based on the thermal condition.

12. The food processing apparatus (10) of any one of claims 1-11, wherein the electrical interface (26) includes at least one conductive pad (105) disposed on a front face (100) of the second connection interface (20) for electrical interaction with the attachment (22).

13. The food processing apparatus (10) of claim 12, wherein the attachment (22) includes an electrical contact point engaging the at least one conductive pad (105) to establish the electrical interaction.

14. The food processing apparatus (10) of any one of claims 1-13, further comprising:
a mixing head (32), wherein the first connection interface (14) is disposed on an underside of the mixing head (32).

15. The food processing apparatus (10) of claim 14, wherein the second connection interface (20) is disposed on a front of the mixing head (32).
